# EUROPEAN PATENT SPECIFICATION

(11) **EP 1 361 992 B1**
(45) Date of publication and mention of the grant of the patent: **02.08.2006**
(21) Application number: 02712523.6
(22) Date of filing: 18.02.2002
(51) Int. Cl.: B65G 25/06

(54) **LOAD- AND UNLOAD FLOOR**
LADE- UND ENTLADEFLÄCHE
PLANCHER DE CHARGEMENT ET DE DECHARGEMENT

(30) Priority: 21.02.2001 NL 1017422; 14.01.2002 NL 1019740
(43) Date of publication of application: 19.11.2003
(73) Proprietor: De Roo, Bert Ronald, 7826 CN Emmen (NL)
(72) Inventor: De Roo, Bert Ronald, 7826 CN Emmen (NL)
(74) Representative: Brookhuis, Hendrik Jan Arnold
(86) International application number: PCT/NL2002/000105
(87) International publication number: WO 2002/066346

(56) References cited:
- US-A- 4 798 802
- US-A- 4 962 848
- US-A- 4 966 275

## Description

The invention relates to a loading and unloading floor for a loading space, provided with one or more parallel and adjacent groups of floor parts, each group comprising elongate floor parts which extend adjacent to one another, each group comprising at least a first and a second floor part which can be slideably displaced in a reciprocating manner in the longitudinal direction and a stationary floor part, which first and second floor parts can be driven by actuator means (e.g. see: document US-A-4 798 802).

Another loading and unloading floor of this type is known from US-A 4,962,848. In the known floor, all the groups have a first and a second displaceable floor part and a stationary floor part. Furthermore, all the floor parts are of the same width. An object which is placed on the floor is carried along when, for each group, the two displaceable floor parts are displaced. If only one of the two displaceable floor parts of each group is displaced, the object is not carried along and is therefore not moved. The known floor operates well when, for example, boxes or crates are being conveyed. In practice, however, this application is less important. A more significant and more frequent application is that of conveying loose bulk material, such as for example grain, domestic refuse, potting compost or fertilizer. The known loading and unloading floor does not cope well with loading and unloading loose bulk material.

The object of the invention is to provide an improved loading and unloading floor which operates well even when loading and unloading loose bulk material.

This object is achieved by a loading and unloading floor of the type described above, characterized in that the stationary floor parts make up less than 33% of the floor area.

As a result of this measure, in the event of a simultaneous displacement of the first and second floor parts in the same direction, there is a smaller area of the floor which resists the movement of the bulk material in the direction of displacement of the first and second floor parts compared to the known loading and unloading floor. As a result, more bulk material is moved for each simultaneous displacement of the first and second floor parts, and therefore loading and unloading will take place more quickly and more efficiently.

An expedient embodiment of the loading and unloading floor according to the invention is characterized in that the stationary floor parts make up at most 27% of the floor area. This is achieved, for example, by selecting the width of the stationary floor parts and the number of stationary floor parts to be such that, during the simultaneous movement of the first and second floor parts, at least 73% of the floor area moves. This provides an additional conveying capacity, so that loose bulk material can virtually always overcome the residual friction.

Tests have shown that the floor operates optimally if the stationary floor parts make up 16-18% of the floor area.

A preferred embodiment of the loading and unloading floor according to the invention is characterized in that in at least one group the stationary floor part has a narrower width than that of the first and second floor parts.

As a result of the stationary floor parts being designed with narrower width than the first and second floor parts, it is possible to reduce the stationary surface area compared to that of the known loading and unloading floor.

This reduction, which means that, during displacement of the first and second floor parts, a smaller area of the floor resists the movement of the bulk material in the direction of displacement of the first and second floor parts, can also be achieved with a loading and unloading floor in which the loading and unloading floor, in addition to the groups of floor parts with a stationary floor part, also comprises groups of floor parts which have only displaceable floor parts.

The above measures mean that the bulk material can be loaded and unloaded more quickly and effectively.

During displacement of only the first or the second floor parts, it is desirable for the load to remain in place. To this end, in an advantageous embodiment of the loading and unloading floor according to the invention, the first floor parts and the second floor parts are of the same width.

Advantageously, the width of the stationary floor parts and the number of stationary floor parts are such that, during the individual movement of the first or second floor parts, at most 45% of the floor area is moving. This ensures that the floor is suitable for different types of load and that, for example, boxes and crates remain stationary when the first or second floor parts are being displaced.

A further highly expedient embodiment of the invention is characterized in that the groups of floor parts are secured releasably, so that they can be fitted when it is necessary for an awkward load to be conveyed.

Experiments have established that, when using the loading and unloading floor and a loading space which is provided with side walls, the side walls create considerable additional friction, which has an adverse effect on the efficiency of loading and unloading loose bulk material.

It is particularly expedient to provide the loading space with side walls, the side walls being provided with one or more groups of wall parts, which lie parallel to and above one another, each group comprising elongate wall parts which extend above one another, each group comprising at least a first and a second wall part which can be displaced in a reciprocating manner in the longitudinal direction, and a stationary wall part, it being possible for the displaceable wall parts of each group to be displaced simultaneously.

An advantageous embodiment of the loading space with displaceable first and second wall parts and stationary wall parts in which all the wall parts can be designed with an identical width is characterized in that at least 10% of the area of the side walls is provided with groups of wall parts. These additional wall parts reduce the friction caused by the side walls to such an extent that loose bulk material can be conveyed even more successfully.

A further advantageous embodiment of the loading space which makes use of the fact that the pressure is greatest at a bottom part of the side walls is characterized in that, of the two side walls, a region which adjoins the floor is provided with groups of wall parts. An additional advantage is that groups of wall parts positioned in this way can easily be coupled to the floor parts positioned in the loading and unloading floor.

The invention also relates to a vehicle, such as a lorry or a trailer, provided with a loading and unloading floor as described above, and to a vehicle provided with a loading space as described above.

The invention also relates to a container or hopper provided with a loading and unloading floor as described above.

The invention will now be explained in more detail with reference to the drawing, in which:
Fig. 1 diagrammatically depicts a loading and unloading floor according to the prior art;
Fig. 2 diagrammatically depicts an embodiment of a loading and unloading floor according to the invention;
Fig. 3 diagrammatically depicts another embodiment of a loading and unloading floor according to the invention;
Fig. 4 diagrammatically depicts an active side wall;
Fig. 5 diagrammatically depicts yet another embodiment of a loading and unloading floor according to the invention;
Fig. 6 shows a perspective plan view of a drive unit for driving the floor parts;
Fig. 7 shows a perspective view from below of the drive unit shown in Fig. 6.

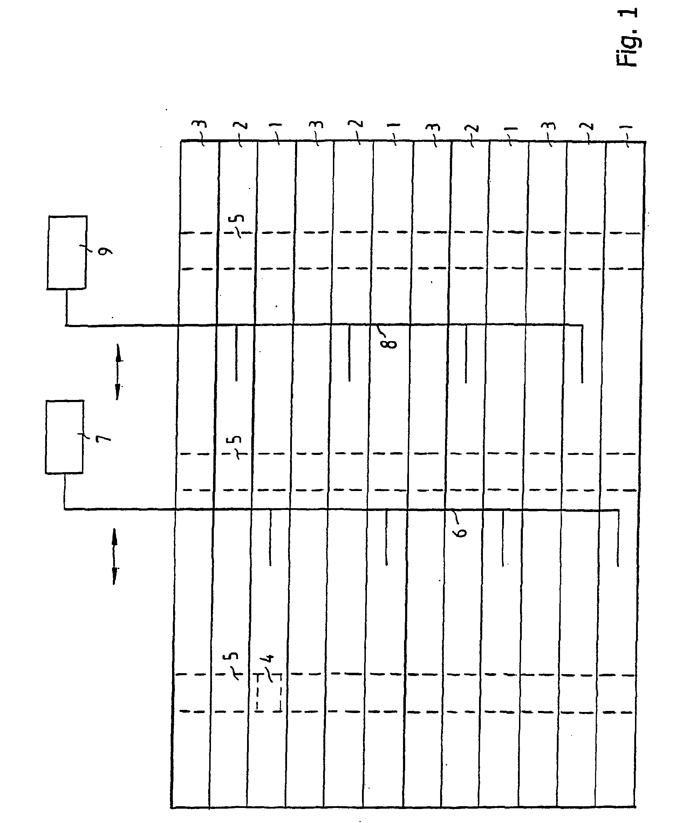

Fig. 1 diagrammatically depicts a loading and unloading floor according to the prior art, comprising groups of in each case three floor parts 1, 2, 3 in slat form. By way of example, the floor parts comprise U-shaped profiled sections made, for example, from aluminium, the closed part of the U-shaped profiled sections facing upwards, with plastic guides 4 positioned between the limbs, which guides in turn rest on a bar 5 which forms part of the chassis of the loading space, generally a loading space of a lorry or trailer. Floor parts 1 are connected, via a coupling member 6 to a hydraulic cylinder 7 and floor parts 2 are connected, via a coupling member 8 to a hydraulic cylinder 9, while floor parts 3 are stationary. The illustration in the figure is diagrammatic, but a detailed embodiment is known from the above-cited patent US-A 4,962,848.

When an object has been placed on the loading and unloading floor, it can be displaced by, for example, firstly moving the floor parts 1 to the left in the figure, then moving the floor parts 2 to the left, and then moving both groups of floor parts to the right, during which movement the object also moves to the right. The reason for this is that when floor parts 1 or floor parts 2 are moving to the left, only 33% of the floor area is moving and the object will remain stationary, while when floor parts 1 and floor parts 2 together are moving to the right, 66.6% of the floor area is moving to the right and the object will be carried along with them. The known floor operates well, if, for example, boxes or crates are being conveyed. However, the known loading and unloading floor has not proven to operate satisfactorily for loading and unloading loose bulk material.

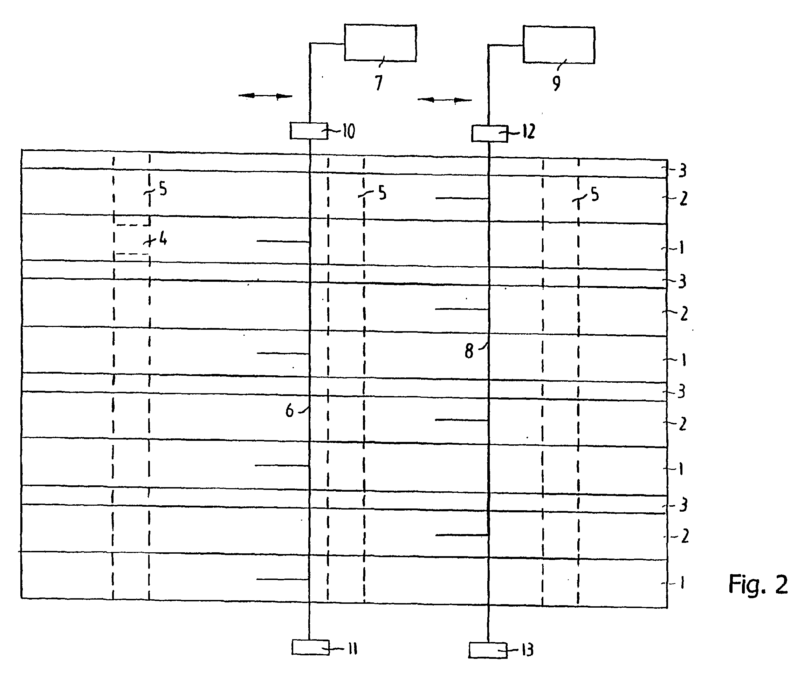

Fig. 2 diagrammatically depicts a loading and unloading floor according to the invention, in which the floor parts 3 are much narrower than floor parts 1 and floor parts 2. In the embodiment shown here, the width of a floor part 3 is only 40% of the width of floor part 1 and floor part 2. This means that when floor parts 1 and floor parts 2 are moving together some 83% of the floor is moving, a situation in which even loose bulk material will also be carried along with the floor parts.

To ensure that an object which has been placed onto the conveyor floor does not move when only floor parts 1 or floor parts 2 are moving, floor parts 3 must have a minimum width, in such a manner that at most 45% of the floor moves. For loose bulk material, the situation is different. In this case, the resistance of the side walls can be used to good effect, and the floor parts 3 may be even narrower than for conveying objects.

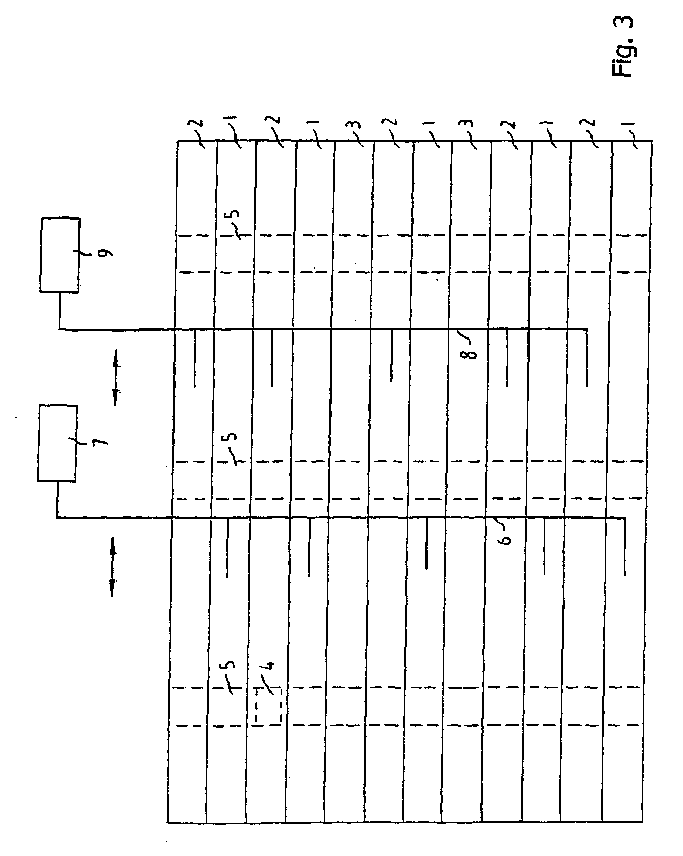

Fig. 3 diagrammatically depicts one possible embodiment of a loading and unloading floor having, at the sides, groups comprising only first and second floor parts 1, 2, which are connected to actuators 7, 9 via coupling members 6, 8. The groups which lie in the centre have first and second displaceable floor parts 1, 2 and stationary floor parts 3.

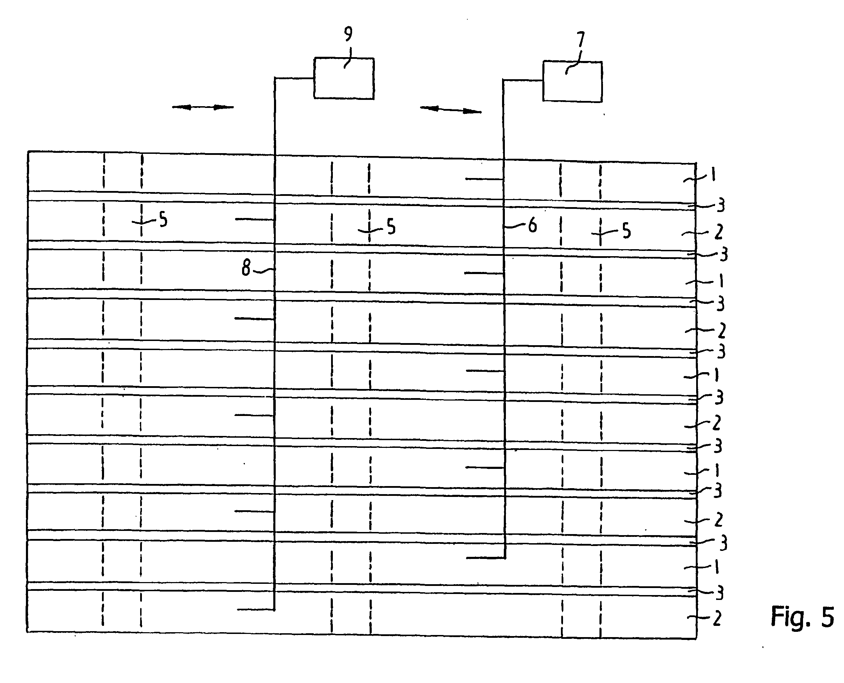

In the preferred embodiment of a loading and unloading floor according to the invention which is shown in Fig. 5, the stationary floor parts 3 of each group are positioned between the first and second floor parts 1, 2 of the same group. The stationary floor parts 3 are much narrower than the first and second floor parts 1, 2 and, in the embodiment shown, cover approximately 10% of the floor area. In this embodiment, the stationary floor parts may also cover a larger percentage of the floor area, preferably approximately 17%, which in practice has been found to provide optimum operation of the floor.

Fig. 2 shows that the coupling member 6 is provided with two vertically positioned sleeves 10, 11 and that the coupling member 8 is provided with two vertically positioned sleeves 12, 13, on which active side walls may be arranged. When the side walls are fitted, each provided with groups of wall parts and each provided with two coupling members, these coupling members slide into the sleeves 10, 11, 12, 13 and these coupling members will also be moved up and down with the aid of hydraulic cylinders 7, 9.

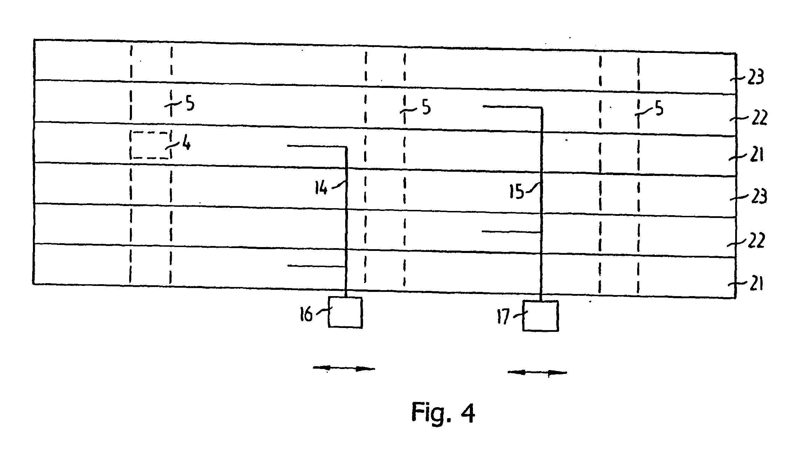

Fig. 4 diagrammatically depicts one possible embodiment of an active side wall provided with wall parts 21, 22, 23 and with two coupling members 14, 15 which are provided with interface plates 16, 17 which, during positioning of the side wall, for example fit into the sleeves 11, 13. Otherwise, the active side wall is virtually identical to the loading and unloading floor and is provided with transverse bars 5, on which plastic guides 4 are positioned, over which the wall parts, which are U-shaped in cross section, can slide. However, it is generally possible for the active side wall to be of somewhat lighter design, since the mechanical load is lower.

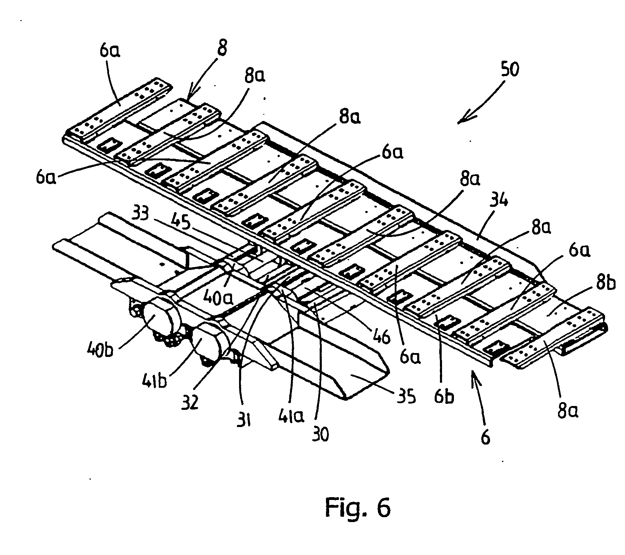

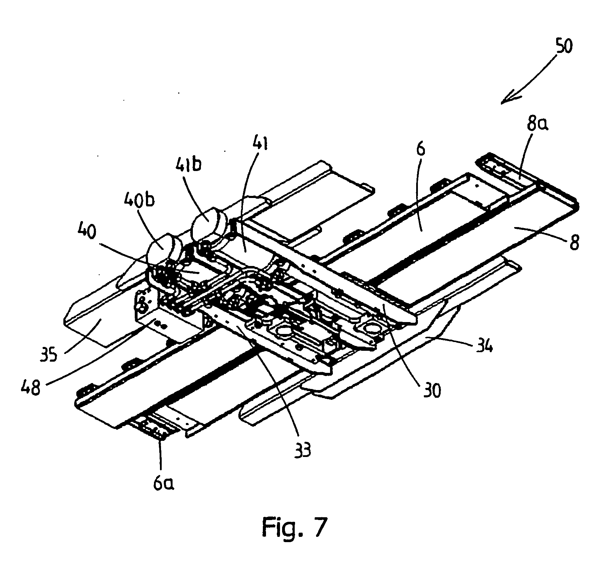

Figs. 6 and 7 show a drive unit 50 which is used to drive the displaceable floor parts 1, 2 of the loading and unloading floor according to the invention. The drive unit 50 comprises a first coupling member 6 and a coupling member 8. The coupling member 6 comprises an elongate bar 6b which is positioned transversely with respect to the direction of displacement of the floor parts 1, 2 and is provided with securing profiled sections 6a which are positioned transversely thereon and can be secured to the first floor parts 1. The coupling member 8 comprises an elongate bar 8b which is positioned transversely to the direction of displacement of the floor parts 1, 2 and is provided with securing profiled sections 8a which are positioned transversely thereon and can be secured to the first floor parts 2. The coupling member 6 can be moved in a reciprocating manner over guide profiled sections 32 and 33. The coupling member 8 can be moved in a reciprocating manner over guide profiled sections 30 and 31. These guide profiled sections 30-33 extend between transverse profiled sections 34 and 35, by means of which the drive unit 50 can be secured to the chassis of the loading space. Two drive cylinders 40, 41 are arranged beneath the transverse profiled section 35 as actuator means, these cylinders being used to drive the coupling members 6 and 8, respectively. In the figure, the ends 40a, 40b of one drive cylinder 40 can be seen. In the figure, the ends 41a, 41b of the other drive cylinder 41 can be seen. A piston rod 45 extends from the end 40a of the drive cylinder 40, which piston rod engages on the underside of the coupling member 6. A piston rod 46 extends from the end 41a of the drive cylinder 41, which piston rod engages on the underside of the coupling member 8. It can be seen from Fig. 7 that the drive cylinders 40, 41 are connected via lines to a valve block 48, which valve block 48 is connected to a hydraulic circuit (not shown).

The embodiments described here always use one hydraulic cylinder and a coupling member to actuate the floor parts associated with the said cylinder. It is also possible to fit one small hydraulic cylinder for each floor part. The coupling member can then be omitted.

## Claims

1. Loading and unloading floor for a loading space, provided with one or more parallel and adjacent groups of floor parts (1-3), each group comprising elongate floor parts (1-3) which extend adjacent to one another, each group comprising at least a first and a second floor (1,2) part which can be slideably displaced in a reciprocating manner in the longitudinal direction and a stationary floor part (3), which first and second floor parts (1,2) can be driven by actuator means (7,9), **characterized in that** the stationary floor parts (3) make up 16-18% of the floor area.

2. Loading and unloading floor according to claim 1, **characterized in that** in at least one group the stationary floor part (3) has a narrower width than the first and second floor parts (1,2).

3. Loading and unloading floor according to claim 1 or 2, **characterized in that** the loading and unloading floor, in addition to the groups of floor parts with a stationary floor part (3), also comprises groups of floor parts which have only slideably displaceable floor parts (1,2).

4. Loading and unloading floor according to one of the preceding claims, **characterized in that** the first floor parts (1) and the second floor parts (2) are of the same width.

5. Loading and unloading floor according to claim 4, **characterized in that** the first floor parts (1) together make up at most 45% of the floor area, and the second floor parts (2) together make up at most 45% of the floor area.

6. Loading and unloading floor according to one of the preceding claims, **characterized in that** the groups of floor parts (1,2,3) are secured releasably.

7. Loading and unloading floor according to one of the preceding claims, **characterized in that** the first floor parts (1) of each group can be displaced simultaneously and the second floor parts (2) of each group can be displaced simultaneously.

8. Loading and unloading floor according to claim 7, **characterized in that** the first floor parts (1) of each group are coupled to one another and can be connected to first actuator means (7), and second floor parts (2) of each group are coupled to one another and can be connected to second actuator means (9).

9. Loading space provided with a loading and unloading floor according to one of the preceding claims, **characterized in that** the loading space is provided with side walls, the side walls being provided with one or more groups of wall parts (21,22,23), which lie parallel to and above one another, each group comprising elongate wall parts (21,22,23) which extend above one another, each group comprising at least a first and a second wall part which can be slideably displaced in a reciprocating manner in the longitudinal direction, and a stationary wall part, it being possible for the displaceable wall parts (21,22,23) of each group to be displaced simultaneously.

10. Loading space according to claim 9, **characterized in that** at least 10% of the area of the side walls is provided with groups of wall parts (21,22,23).

11. Loading space according to claim 10, **characterized in that** the side walls, in a region which adjoins the loading and unloading floor, are provided with groups of wall parts (21,22,23).

12. Vehicle provided with a loading and unloading floor according to one of claims 1-8.

13. Vehicle provided with a loading space according to one of claims 9-11.

14. Container or hopper provided with a loading and unloading floor according to one of claims 1-8.

## Patentansprüche

1. Be- und Entladeboden für einen Laderaum, ausgebildet mit einer oder mehreren parallelen und benachbarten Gruppen an Bodenteilen (1-3), wobei jede Gruppe längliche Bodenteile (1-3) umfasst, die sich benachbart zu einander erstrecken, wobei jede Gruppe zumindest ein erstes und ein zweites Bodenteil (1, 2) umfasst, das gleitbar hin und her in Längsrichtung versetzt werden kann, und ein stationäres Bodenteil (3), wobei das erste und das zweite Bodenteil (1, 2) mittels eines Aktormittels (7, 9) angetrieben werden kann, **dadurch gekennzeichnet, dass** die stationären Bodenteile (3) 16-18% der Bodenfläche ausmachen.

2. Be- und Entladeboden nach Anspruch 1, **dadurch gekennzeichnet, dass** in zumindest einer Gruppe das stationäre Bodenteil (3) eine schmalere Breite als das erste und zweite Bodenteil (1, 2) aufweist.

3. Be- und Entladeboden gemäß Anspruch 1 oder 2, **dadurch gekennzeichnet, dass** der Be- und Entladeboden zusätzlich zu den Gruppen an Bodenteilen mit einem stationären Bodenteil (3) auch Gruppen mit Bodenteilen umfasst, welche nur gleitbar versetzbare Bodenteile (1, 2) aufweisen.

4. Be- und Entladeboden gemäß einem der vorherigen Ansprüche, **dadurch gekennzeichnet, dass** die ersten Bodenteile (1) und die zweiten Bodenteile (2) die gleiche Breite aufweisen.

5. Be- und Entladeboden gemäß Anspruch 4, **dadurch gekennzeichnet, dass** die ersten Bodenteile (1) zusammen höchstens 45% der Bodenfläche ausmachen und die zweiten Bodenteile (2) zusammen höchstens 45% der Bodenfläche ausmachen.

6. Be- und Entladeboden gemäß einem der vorherigen Ansprüche, **dadurch gekennzeichnet, dass** die Gruppe der Bodenteile (1, 2, 3) lösbar gesichert ist.

7. Be- und Entladeboden gemäß einem der vorherigen Ansprüche, **dadurch gekennzeichnet, dass** die ersten Bodenteile (1) jeder Gruppe gleichzeitig versetzt werden können und die zweiten Bodenteile (2) jeder Gruppe gleichzeitig versetzt werden können.

8. Be- und Entladeboden gemäß Anspruch 7, **dadurch gekennzeichnet, dass** die ersten Bodenteile (1) jeder Gruppe miteinander gekoppelt sind und mit einem ersten Aktormittel (7) gekoppelt werden können und die zweiten Bodenteile (2) jeder Gruppe miteinander gekoppelt sind und mit einem zweiten Aktormittel (9) gekoppelt werden können.

9. Laderaum, ausgebildet mit einem Be- und Entladeboden gemäß einem der vorherigen Ansprüche, **dadurch gekennzeichnet, dass** der Laderaum mit Seitenwänden ausgebildet ist, wobei die Seitenwände mit einer Gruppe oder mehreren Gruppen an Wandteilen (21, 22, 23) ausgebildet ist, welche parallel zueinander und übereinander liegen, wobei jede Gruppe längliche Wandteile (21, 22, 23) umfasst, welche sich übereinander erstrecken, wobei jede Gruppe zumindest ein erstes und ein zweites Wandteil, das gleitbar hin- und her in Längsrichtung versetzt werden kann, und ein stationäres Wandteil umfasst, wobei es für die versetzbaren Wandteile (21, 22, 23) jeder Gruppe möglich ist, gleichzeitig versetzt zu werden.

10. Laderaum gemäß Anspruch 9, **dadurch gekennzeichnet, dass** zumindest 10% der Fläche der Seitenwände mit Gruppen von Wandteilen (21, 22, 23) ausgebildet ist.

11. Laderaum gemäß Anspruch 10, **dadurch gekennzeichnet, dass** die Seitenwände in einem Bereich, der an den Be- und Entladeboden angrenzt, mit Gruppen von Wandteilen (21, 22, 23) ausgebildet sind.

12. Fahrzeug, ausgebildet mit einem Be- und Entladeboden gemäß einem der Ansprüche 1 bis 8.

13. Fahrzeug, ausgebildet mit einem Laderaum gemäß einem der Ansprüche 9 bis 11.

14. Behälter oder Bunker, ausgebildet mit einem Be- und Entladeboden gemäß einem der Ansprüche 1 bis 8.

## Revendications

1. Plancher de chargement et de déchargement pour un espace de charge, pourvu d'un ou plusieurs groupes de parties de plancher (1-3) parallèles et adjacents, chaque groupe comprenant des parties de plancher allongées (1-3) qui s'étendent adjacentes entre elles, chaque groupe comprenant au moins une première et une deuxième parties de plancher (1, 2) qui peuvent être déplacées par coulissement dans un mode alternatif dans la direction longitudinale et une partie de plancher fixe (3), les première et deuxième parties de plancher (1-2) pouvant être entraînées par des moyens actionneurs (7, 9), **caractérisé en ce que** les parties de plancher fixes (3) représentent 16 à 18 % de la surface du plancher.

2. Plancher de chargement et de déchargement selon la revendication 1, **caractérisé en ce que**, dans au moins un groupe, la partie de plancher fixe (3) a une plus petite largeur que les première et deuxième parties de plancher (1, 2).

3. Plancher de chargement et de déchargement selon la revendication 1 ou 2, **caractérisé en ce qu'**en supplément des groupes de parties de plancher comprenant une partie de plancher fixe (3), le plancher de chargement et de déchargement comprend aussi des groupes de parties de plancher qui ont seulement des parties de plancher (1, 2) pouvant être déplacées par coulissement.

4. Plancher de chargement et de déchargement selon une des revendications précédentes, **caractérisé en ce que** les premières parties de plancher (1) et les deuxièmes parties de plancher (2) sont de même largeur.

5. Plancher de chargement et de déchargement selon la revendication 4, **caractérisé en ce que** les premières parties de plancher (1) représentent ensemble au maximum 45 % de la surface du plancher et les deuxièmes parties de plancher (2) représentent ensemble au maximum 45 % de la surface du plancher.

6. Plancher de chargement et de déchargement selon une des revendications précédentes, **caractérisé en ce que** les groupes de parties de plancher (1, 2, 3) sont fixés de façon détachable.

7. Plancher de chargement et de déchargement selon une des revendications précédentes, **caractérisé en ce que** les premières parties de plancher (1) de chaque groupe peuvent être déplacées simultanément et que les deuxièmes parties de plancher (2) de chaque groupe peuvent être déplacées simultanément.

8. Plancher de chargement et de déchargement selon la revendication 7, **caractérisé en ce que** les premières parties de plancher (1) de chaque groupe sont accouplées entre elles et peuvent être reliées à un premier moyen actionneur (7) et les deuxièmes parties de plancher (2) de chaque groupe sont accouplées entre elles et peuvent être reliées à un deuxième moyen actionneur (9).

9. Espace de charge équipé d'un plancher de chargement et de déchargement selon une des revendications précédentes, **caractérisé en ce que** l'espace de charge est muni de parois latérales, les parois latérales étant munies d'un ou de plusieurs groupes de parties de parois (21, 22, 23) qui s'étendent parallèlement entre elles et l'une au-dessus de l'autre, chaque groupe comprenant des parties de parois allongées (21, 22, 23) qui s'étendent l'une au-dessus de l'autre, chaque groupe comprenant au moins une première partie de paroi et une deuxième partie de paroi qui peuvent être déplacées par coulissement dans un mode alternatif dans la direction longitudinale, et une partie de paroi fixe, et il est possible que les parties de parois mobiles (21, 22, 23) de chaque groupe soient déplacées simultanément.

10. Espace de charge selon la revendication 9, **caractérisé en ce qu'**au moins 10 % de la surface des parois latérales est munie de groupes de parties de parois (21, 22, 23).

11. Espace de charge selon la revendication 10, **caractérisé en ce que** les parois latérales sont munies de groupes de parties de parois (21, 22, 23) dans une région qui est adjacente au plancher de chargement et de déchargement.

12. Véhicule équipé d'un plancher de chargement et de déchargement selon une des revendications 1-8.

13. Véhicule équipé d'un espace de charge selon une des revendications 9-11.

14. Récipient ou trémie équipé d'un plancher de chargement ou de déchargement selon une des revendications 1-8.
